Europäisches Patentamt

European Patent Office

Office européen des brevets

(19)

(11) Publication number : **0 339 551 B1**

(12) **EUROPEAN PATENT SPECIFICATION**

(45) Date of publication of patent specification :
09.09.92 Bulletin 92/37

(51) Int. Cl.[5] : **B23K 11/24**

(21) Application number : **89107398.3**

(22) Date of filing : **24.04.89**

(54) **Control apparatus of resistance welders and control method thereof.**

(30) Priority : **25.04.88 JP 100272/88**

(43) Date of publication of application :
**02.11.89 Bulletin 89/44**

(45) Publication of the grant of the patent :
**09.09.92 Bulletin 92/37**

(84) Designated Contracting States :
**DE FR GB IT**

(56) References cited :
**EP-A- 0 256 183**
**PATENT ABSTRACTS OF JAPAN vol. 9, no.
300 (M-433)(2023) 27 November 1985, & JP-
A-60 137582 (HONDA GIKEN KOGYO K.K.)
22July 1985**

(56) References cited :
**PATENT ABSTRACTS OF JAPAN vol. 6, no.
260 (M-180)(1138) 18 December 1982, & JP-
A-57 154378 (DENGENSHIYA SEISAKUSHO
K.K.)24 September 1982**

(73) Proprietor : **Kabushiki Kaisha Toshiba
72, Horikawa-cho Saiwai-ku
Kawasaki-shi (JP)**

(72) Inventor : **Izume, Takatomo c/o Intellectual
Prop. Div.
Kabushiki Kaisha Toshiba 1-1 Shibaura
1-chome
Minato-ku Tokyo 105 (JP)**

(74) Representative : **Henkel, Feiler, Hänzel &
Partner
Möhlstrasse 37
W-8000 München 80 (DE)**

## Description

The present invention relates to a control apparatus of resistance welders and, more particularly, to a control apparatus of resistance welders, which can improve voltage control precision of single-phase full-wave resistance welders using a thyristor.

Resistance welders are also called a "spot welder", and are widely used in general industrial applications such as an assembly line of a vehicle. Of the resistance welders, a single-phase full-wave resistance welder is of most popular type.

The single-phase full-wave resistance welder controls a primary voltage applied to a welding transformer using a switching element such as a thyristor, thereby controlling a secondary current of the welding transformer, i.e., a welding current.

As a control system, a current control system wherein a primary or secondary current of the welding transformer is fed back and a voltage control system wherein a voltage applied to a primary side of the welding transformer is fed back are known.

The current control system allows high-precision welding current control but requires a current detector such as a current transformer, search coil, and the like, resulting in an expensive system. In this case, when the welding transformer has two or more guns, if there is a gun through which no welding current flows, a current flowing through the remaining gun is increased accordingly. Meanwhile, the voltage control system cannot achieve high-precision welding current control but is inexpensive and economical.

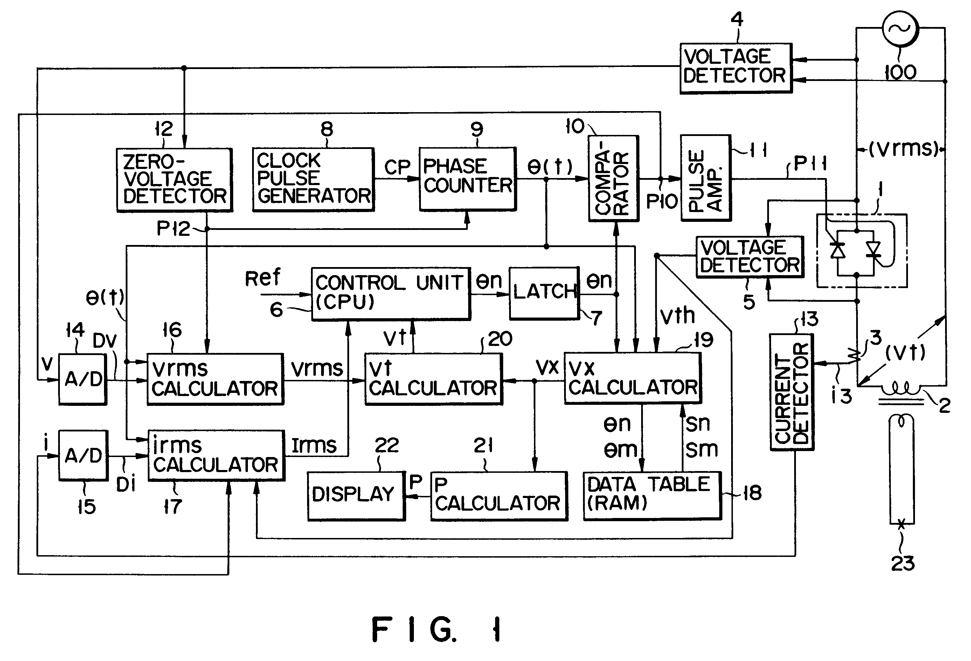

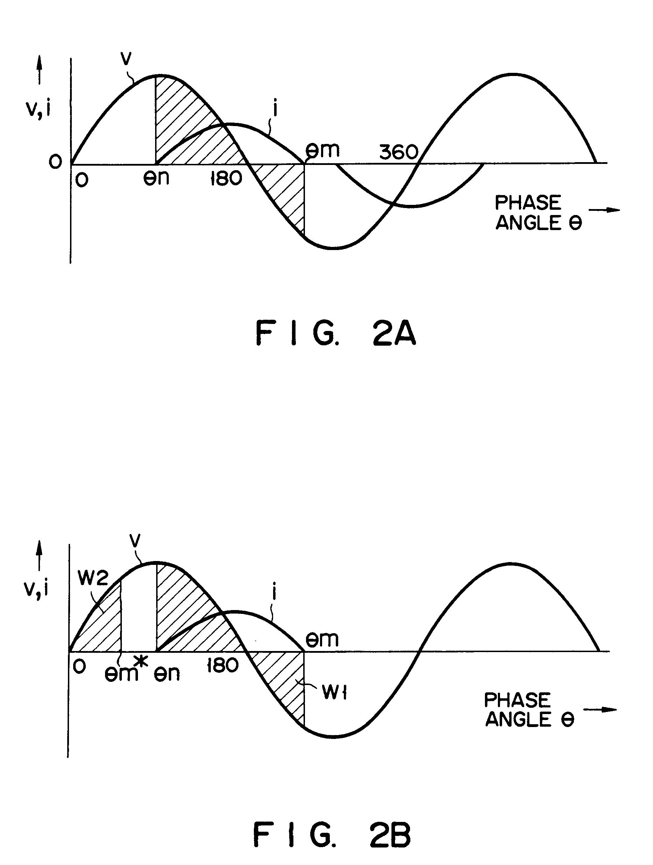

Fig. 2.A shows a waveform when a power supply voltage is represented by $\underline{v}$, a primary current of the welding transformer is represented by $\underline{i}$, and firing angle $\theta n$ is 90° in the single-phase full-wave resistance welder.

Since the welding transformer has a power factor < 1, current $\underline{i}$ is monotonously increased from zero to $\theta n$, and is then monotonously decreased and returns to zero at $\theta m$, thus completing half-cycle energization. In the next half cycle, a similar current flows in an opposite polarity. A power supply voltage indicated by hatching in the range of $\theta n$ to $\theta m$ is applied to the welding transformer in a half-cycle energization interval.

In the voltage control system, the voltage of the hatched portion is detected and fed back every half cycle.

When the voltage of the hatched portion is detected at every given sampling time to obtain an effective value, since initial and end values of this voltage are not zero, a detection error is generated depending on sampling start and end timings. If a sampling period is shortened, the detection error can be eliminated. However, if another control, monitoring, and the like are performed together, processing capacity of a microcomputer of a control apparatus is exceeded. As a result, a plurality of microcomputers are necessary, resulting in an expensive system.

Prior art document EP-A1-0 256 183 discloses a RMS current determination system in which coil is used to measure the first differential with respect to time of a current signal waveform. The RMS value of the current signal waveform is determined directly from the first differential waveform generated by the coil by mathematically integrating the first differential waveform. The integration is performed by converting the signal into digital form and by sampling N times per piece of waveform or time period being analyzed. The value of N can be chosen so that the entire half cycle is sampled. Thus, the RMS value to be calculated is based on the whole half cycle time period not merely a part on the half cycle time period. Alternatively, the RMS value of segments of a pulse with a long duration can be measured. As each sampling and conversion is completed, the digital number, representing the instantaneous value of the amplitude of the differential waveform, is used to determine the instantaneous value of the current at that time. This current value is squared and added to the sum of the prior squared values. Each squared value is summed until N samplings and conversions have been made. At this point, the final total is divided by N, and the square root is then taken to obtain the RMS value.

Further, prior art document JP-A-60-137 582 discloses a constant current control circuit of welding resistance. In this circuit, when an inverter operates and welding current is supplied from a power source circuit to a welding gun, the current is detected by a detector, and made to voltage of waveform corresponding to effective value of the current by an arithmetic circuit. The voltage is compared with a voltage corresponding to effective value of current value set by a current setting device by a comparator, and when the two coincide, a signal of low level is output from the comparator. The output signal controls a pulse width control circuit, rises up synchronously with an output pulse of an oscillator. The pulse current that was flowing in transistors is cut off by lowering of output of the control circuit.

Finally, prior art document JP-A-57-154 378 discloses a control device for welding current waveform of a resistance welding machine. In this control device, an initial value setter sets a first current value when a welding current effective value should be changed. A final value setter sets a current value at the completion time of change, and a cycle number setter sets a time from the start of change to the completion with one cycle of the power source frequency as a unit. A target value operator subtracts the value of the initial value setter from the value of the final value setter and divides the subtraction result by the value of the cycle number setter to calculate the quotient, namely, a current variation per one cycle. This obtained value is added to the initial value in every one cycle of power supply during the time corresponding to the value of the cycle number setter.

It is a first object of the present invention to provide a control apparatus of resistance welders, which can reduce a processing load on a microcomputer and can precisely detect an effective voltage applied to a welding transformer in a predetermined sampling period at high speed. It is a second object of the , present invention to provide a control apparatus of resistance welders, which can realize an inexpensive high-precision voltage control system, and can display a use rate of the welding transformer.

To solve this object the present invention provides a control apparatus as stated in claim 1.

The control apparatus of the present invention is applied to, e.g., a single-phase full-wave resistance welder in which anti-parallel coupled thyristors are connected in series with a primary winding of a welding transformer, and firing phase $\theta n$ of each thyristor is controlled to adjust a welding current. In this control apparatus, a given phase range of sinusoidal value $VK = KOsin\theta K$ having a given peak value is divided in units of phases $\theta K$ at predetermined phase intervals, and square sum $SK = Vl^2 + V2^2 + V2^2 + ... VK^2$ of the sinusoidal values $VK$ with respect to the phases $\theta K$ is calculated in advance. The calculated square sum $SK$ is stored in a storage means. Square sums $Sn (= Vl^2 + ...Vn^2)$ and $Sm (= Vl^2 + ... Vm^2)$ of firing phase $\theta n$ and energization end phase $\theta_m$ of the thyristors are read out from the storage means. On the basis of $\theta n$ and $\theta m$, normalized effective value $Vx$ of an effective voltage applied to the welding transformer is calculated by a first calculating means.

The control apparatus of the present invention can comprise the following arrangement. Voltage $\underline{v}$ of an AC power supply is detected by a voltage detection means. Based on detected voltage $\underline{v}$, effective voltage $Vrms$ of the AC power supply is calculated by a calculating means. Based on the effective voltage $Vrms$ and the normalized effective value $Vx$, effective voltage $Vt$ applied to the welding transformer is calculated by a second calculating means. Based on the effective value $Vx$, use rate $P$ of the welding transformer is calculated by a third calculating means. The use rate $P$ is displayed on a display means. Furthermore, effective current $Irms$ of the welding transformer is detected by a current detection means.

In the above arrangement, immediately after half-cycle energization of voltage $\underline{v}$ is completed, the first calculating means executes the following arithmetic operation to calculate value $Vx$:

$$Vx = Kl \cdot \sqrt{Sl80 - Sn + Sm}$$

(where $Kl$ and $Sl80$ are constants)

The second calculating means executes the following arithmetic operation on the basis of the calculated value $Vx$ and separately calculated effective voltage $Vrms$ of the AC power supply so as to calculate effective voltage $Vt$ applied to the welding transformer:

$$Vt = Vrms \cdot Vx/Vl80$$

(where $Vl80$ is a constant)

The third calculating means executes the following arithmetic operation on the basis of $Vx$ to calculate use rate $P$ of the welding transformer:

$$P = l00Vx/Vl80$$

The use rate $P$ is externally displayed by the display means.

Effective voltage $Vt$ and effective current $Irms$ calculated as described above are used for voltage control and current control as feedback signals.

This invention can be more fully understood from the following detailed description when taken in conjunction with the accompanying drawings, in which:

Fig. l is a block diagram of an embodiment according to the present invention;

Figs. 2A and 2B are waveform charts for explaining the operation of the present invention; and

Figs. 3A and 3B are flow charts showing examples of processing sequences of a calculating means used in the present invention.

An embodiment of the present invention will now be described with reference to Fig. l.

In Fig. l, reference numeral l denotes anti-parallel connected thyristors; 2, a welding transformer; 3, a current transformer for detecting a primary current of welding transformer 2; 4, a voltage detector for detecting a power supply voltage of AC power supply l00 and outputting signal $\underline{v}$; and 5, a voltage detector for detecting thyristor terminal voltage (anode-cathode voltage) $Vth$. Reference numeral 6 denotes a control unit for calculating and outputting firing phase $\theta n$; 7, a latch for latching phase $\theta n$ output from control unit 6; 8, a clock pulse generator for generating clock pulses $CP$ having a given frequency; 9, a phase counter for counting clock pulses $CP$ and outputting phase data $\theta(t)$ of voltage $\underline{v}$; l0, a comparator for comparing output $\theta(t)$ of counter 9 with phase $\theta n$; and ll, a pulse amplifier (PA). Reference numeral l2 denotes a zero-voltage detector for outputting pulses Pl2 every time voltage $\underline{v}$ detected by voltage detector 4 becomes zero. Reference numeral l3 denotes a current detector for outputting signal $\underline{i}$ having a voltage proportional to secondary current i3 of current transformer 3. Reference numerals l4 and l5 denote A/D converters for converting analog signals $\underline{v}$ and $\underline{i}$ into corresponding digital signals Dv and Di; l6, a Vrms calculator for calculating effective value Vrms of a sinusoidal power supply voltage; and l7, an Irms calculator for calculating effective value Irms of a sinusoidal current. Reference numeral l8 denotes a data table (storage means) storing normalization data (to be described later); l9, a Vx calculator for calculating normalized effective voltage Vx applied to the welding transformer on the basis of firing phase angle θn and energization end phase angle θm (to be described later) using the normalization data; 20, a Vt calculator for calculating effective voltage Vt applied to the welding transformer on the basis of Vrms and Vx; 2l, a P calculator for calculating use rate P of the welding transformer on the basis of Vx; and 22, a display for displaying the use rate P.

In the above arrangement, count value θ(t) of phase counter 9 is counted up in synchronism with pulses CP output from clock pulse generator 8. Counter 9 is reset to zero in response to output Pl2 of zero-voltage detector l2, and outputs phase signal θ(t) synchronous with a power supply voltage.

Control unit 6 receives control target value Ref, and effective voltage Vt or effective current Irms of the welding transformer is fed back thereto. Control unit 6 calculates firing angle θn in accordance with these signals Ref and Vt (or Irms), and writes it in latch 7. Comparator l0 outputs pulse Pl0 when phase signal θ(t) coincides with firing angle θn. Pulse Pl0 is supplied to thyristors l through pulse amplifier ll. Tyristors l are fired in response to output pulse Pll of amplifier ll.

Control unit 6 is arranged to selectively respond to one of voltage control feedback signal Vrms and current control feedback signal Irms.

The principal part of this invention is a part for calculating effective voltage Vt of welding transformer 2 using normalized data, and will be described below.

Table l below shows an example of normalization data sotred in data table l8. This example shows instantaneous value VK obtained by normalizing phase angle θK in units of l° within the range of l to l80° and square sum SK calculated in advance (K = l to l80, and in this case, K = θK). VK is an integer part of 255sinθK in the case of 8 bits. However, VK is not stored as data but is presented for the sake of descriptive convenience. Square sum SK is a sum of squares of instantaneous values VK, and values given by the following equations are calculated and stored in advance:

$$Sl = Vl^2, S2 = Sl + V2^2, S3 = S2 + V3^2,...$$
$$SK = S(K-l) + VK^2,..., Sl80 = Sl79 + Vl80^2$$

## Table 1

| Index (K) | Phase Angle (θK) | Instantaneous Value (VK) | Square Sum (SK) |
|---|---|---|---|
| 1 | 1 | 4 | 16 |
| 2 | 2 | 8 | 80 |
| 3 | 3 | 13 | 249 |
| . | . | . | . |
| . | . | . | . |
| . | . | . | . |
| 89 | 89 | 254 | 2,879,526 |
| 90 | 90 | 255 | 2,944,551 |
| 91 | 91 | 254 | 3,009,067 |
| . | . | . | . |
| . | . | . | . |
| . | . | . | . |
| 177 | 177 | 13 | 5,823,997 |
| 178 | 178 | 8 | 5,824,061 |
| 179 | 179 | 4 | 5,824,077 |
| 180 | 180 | 0 | 5,824,077 |

Note that when calculating portions (6, l6, l7, l9, 20, 2l) in Fig. l are constituted by an RISC (Reduced Instruction Set Computer) type high-speed MPU, square sums SK in Table l may be calculated in real time. In this case, SK need not be calculated in advance.

Vx calculator l9 fetches firing phase angle data θn, and monitors detection signal Vth of a thyristor terminal voltage (anode-cathode voltage). Vx calculator l9 detects energization end phase angle θm on the basis of phase signal θ(t) upon a change in Vth generated in a turn-off state. Thereafter, calculator l9 reads out square sums Sn (= S(n-l) + Vn$^2$) and Sm (= S(m-l) + Vm$^2$) from data table l8, and executes an arithmetic operation given by equation (l):

$$Vx = KI \cdot \sqrt{SI80 - Sn} + Sm \quad (I)$$

(where KI and SI80 are constants)

Calculated value Vx means a normalized effective voltage applied to the welding transformer. More specifically, as shown in Fig. 2B, if $\theta m^* = \theta m - I80°$, voltage waveform WI between phase angles I80° and $\theta m$ is equal to waveform W2 between phases 0° and $\theta m^*$. An effective voltage between $\theta n$ and $\theta m$ is equal to a sum effective voltage of voltages between 0° to $\theta m^*$ and between $\theta n$ and I80°. Since phase counter 9 is reset to zero every I80° (half cycle of $\underline{v}$), the value of energization end phase angle $\theta m$ is detected as $\theta m^*$. Therefore, immediately after energization to transformer 2 is completed, data table I8 is accessed to calculate Vx in a short period of time.

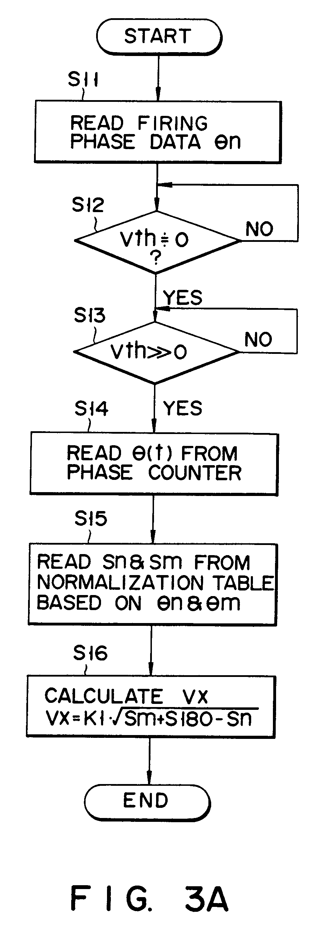

Fig. 3A shows a processing sequence for calculating normalized effective voltage Vx.

First, Vx calculator I9 shown in Fig. I comprising, e.g., a microcomputer, reads firing phase angle data $\theta m$ from data table I8 (step SII).

Calculator I9 receives terminal voltage Vth of thyristors I detected by voltage detector 5. When voltage Vth is a small value corresponding to the ON voltage of thyristors I (YES in step SI2) and thereafter becomes sufficiently larger than the ON voltage of thyristors I (YES in step SI3), calculator I9 reads data $\theta(t)$ from phase counter 9 (step SI4).

Calculator I9 refers to data table I8 having the content as shown in Table I using data $\theta m$ and $\theta(t)$ obtained until step SI4, thus obtaining square sums Sn and Sm (step SI5). When square sums Sn and Sm are obtained, calculator I9 performs a calculation of equation (I) (step SI6) and outputs normalized effective voltage Vx.

On the other hand, effective voltage Vrms of a power supply voltage is detected and updated every half cycle by Vrms calculator I6. Vt calculator 20 calculates effective voltage Vt applied to welding transformer 2 using Vx and Vrms on the basis of equation (2), and outputs it as a feedback signal.

$$Vt = Vrms \cdot Vx / VI80 \quad (2)$$

for $VI80 = KI \cdot \sqrt{SI80}$ (constant)

When voltage control is selected, control unit 6 performs voltage control using Vt as a feedback signal.

Irms calculator I7 detects a current from firing phase angle $\theta n$ to energization end phase angle $\theta m$ at a predetermined sampling period, and calculates and outputs effective current Irms. When current control is selected, control unit 6 performs current control using Irms as a feedback signal.

P calculator 2I calculates and outputs use rate P of the welding transformer using Vx on the basis of equation (3), and display 22 externally displays it.

$$P = I00 \cdot Vx / VI80 \quad (3)$$

Thus, the use rate of the welding transformer can be continuously monitored.

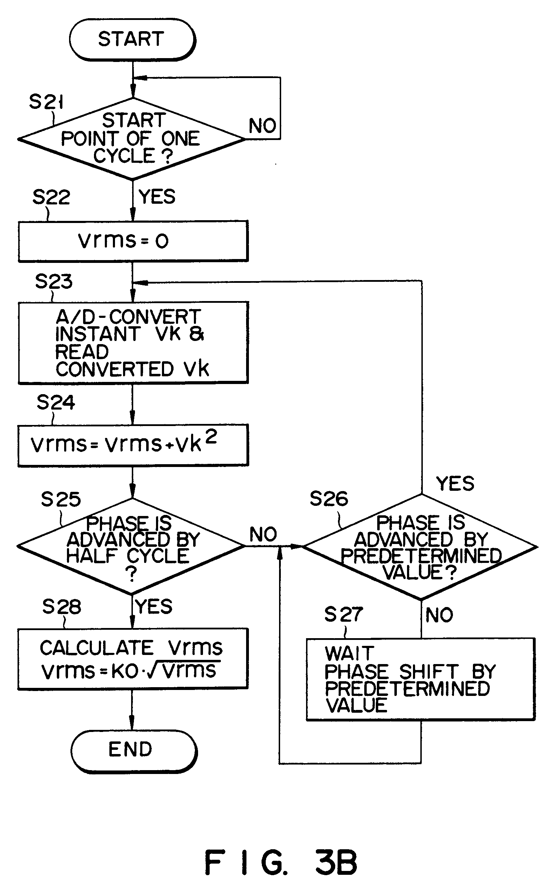

Fig. 3B shows a processing sequence for calculating effective value Vrms of a power supply voltage.

When zero-voltage detector I2 in Fig. I detects a zero-crossing point of power supply voltage $\underline{v}$, it generates zero-crossing point detection pulse PI2 (YES in step S2I). Since power supply voltage $\underline{v}$ when pulse PI2 is generated is zero, Vrms calculator I6 in Fig. I, comprising, e.g., a microcomputer, outputs Vrms = 0 (step S22).

Calculator I6 receives power supply voltage data Dv obtained by converting analog power supply voltage $\underline{v}$ into digital data by A/D converter I4 (step S23). Calculator I6 calculates new power supply voltage effective value Vrms using power supply voltage data Dv and power supply voltage effective value Vrms from detector I2 on the basis of the following equation:

$$Vrms \leftarrow Vrms + VK^2 \quad (4)$$

Vrms calculated by the above equation is used as new Vrms (step S24).

Subsequently, it is checked based on data Dv if the phase of voltage $\underline{v}$ is advanced by I80° (half cycle) (step S25). If the phase shift is smaller than I80° (NO in step S25), it is checked if the phase of voltage $\underline{v}$ is advanced by a predetermined value (e.g., I°) (step S26). If the phase shift is smaller than I° (NO in step S26), it is waited until the phase is advanced by I° from the present phase (step S27). If the phase of voltage $\underline{v}$ is advanced by I° (YES in step S26), the flow returns to the processing loop of steps S23 to S25.

If it is detected in step S25 that the phase shift has reached I80° (YES in step S25), calculator I6 calculates new power supply voltage effective value Vrms on the basis of the following equation:

$$Vrms \leftarrow K0 \cdot \sqrt{Vrms} \quad (5)$$

Vrms calculated by the above equation is output as new Vrms (step S28).

According to the present invention, an effective voltage applied to the welding transformer can be accurately detected at high speed, and high-precision voltage control can be achieved. Since sampling in voltage detection need not be performed at high speed, inexpensive, economical high-precision voltage control can be realized. Since use rate P of the welding transformer can be displayed, a control margin can be monitored, the apparatus is easy to use, and a reliable operation can be performed. The use rate of the welding transformer can also be displayed when current control is selected. An appropriate capacitance of the welding transformer can be easily selected.

## Claims

1. A control apparatus used for a resistance welder which comprises a welding transformer (2), a primary winding of which is connected to an AC power supply (l00) and a secondary winding of which is connected to a welding gun (23), and a switching element (l) inserted between said AC power supply (l00) and the primary winding of said welding transformer (2) and fired at a predetermined firing phase ($\theta$n), comprising:

   storage means (l8) including a data table for calculating in advance and storing a square sum SK in such a manner that a sinusoidal wave VK = K0sin$\theta$K having a predetermined peak value K0 and corresponding to an AC component of said AC power supply (l00) is divided at predetermined phase intervals (l°) within a predetermined phase range (0° to 180°), and square values $VK^2$ of the sinusoidal wave (VK) are calculated in units of divided phases $\theta$K ($\theta$K = l, 2, 3, ..., 180°) so as to calculate the square sum SK (= $Vl^2 + V2^2 + V3^2 + ... + VK^2$) of the sinusoidal wave VK corresponding to the phase $\theta$K; and

   Vx calculating means (l9) coupled to said storage means (l8), for reading out a value of a square sum Sn (= $Vl^2 + V2^2 + V3^2 + ... + Vn^2$) at the firing phase (bn) and a value of a square sum Sm (= $Vl^2 + V2^2 + V3^2 + ... + Vm^2$) at a phase ($\theta$m) upon completion of energization of said switching element (l) from said storage means (l8), and calculating a normalized effective value Vx obtained by normalizing an effective value Vrms of the AC power supply voltage on the basis of the readout square sums Sn and Sm (equation (l)),

   wherein the parameter VK denotes voltage of the sinusoidal wave where the suffix K is an index number defined between a predetermined range (cf. l ≦ K ≦ l80 in Table l on page 7) and corresponds to the predetermined phase intervals, the parameter K0 denotes the peak value of VK, the parameter SK denotes the square sum of VK, the parameter $\theta$K denotes a phase angle of VK, the parameter Sn denotes a square sum of voltage Vn of the sinusoidal wave obtained at a phase angle $\theta$n where n is a suffix of a predetermined number, the parameter Sm denotes a square sum of Vm of the sinusoidal wave obtained at a phase angle $\theta$m where m is a suffix of a predetermined number, and the parameter Vx denotes the normalized effective voltage corresponding to an effective voltage (Vt) applied to the welding transformer (2);

   means (5-l2, 20) for on/off-controling said switching element (l) in accordance with the normalized effective value Vx and the effective value Vrms of said AC power supply voltage,

   effective current detecting means (3, l3, l5, l7), coupled to said welding transformer (2), for detecting an effective current Irms flowing through said welding transformer (2);

   means (5 - l2), coupled to said effective current detecting means (l7), for current-controlling said switching element (l) using the effective current Irms as a control feedback signal.

2. A control apparatus according to claim l, characterized in that said switching element (l) includes anti-parallel connected thyristors.

3. A control apparatus to claim l or 2, characterized in that said resistance welder is of a single-phase full-wave type.

4. A control apparatus according to any one of claims l to 4, characterized by further comprising:

   voltage detecting means (4), coupled to said AC power supply (l00), for detecting a voltage (V) of said AC power supply (l00);

   Vrms calculating means (l6), coupled to said voltage detecting means (4), for calculating the effective value Vrms from the AC power supply voltage (v) detected by said voltage detecting means (4);

   Vt calculating means (20), coupled to said Vrms calculating means (l6), for calculating an effective voltage Vt applied to the primary winding of said welding transformer (2) using the effective value Vrms and the normalized effective value Vx; and

   means (5 - l2), coupled to said Vt calculating means (20), for voltage-controlling said switching element (l) using the effective voltage Vt as a control feedback signal.

5. A control apparatus according to any one of claims l to 4, characterized by further comprising:

   P calculating means (2l), coupled to said Vx calculating means (l9), for calculating a use rate P of said welding transformer (2) on the basis of a ratio (equation (3)) of a present value (Vx) to a maximum value (Vl80) of the normalized effective value Vx; and

means (22), coupled to said P calculating means (2l), for displaying the calculated use rate P.

6. A method for controlling a resistance welder according to claim 1, comprising the steps of:

calculating a square sum SK in such a manner that a sinusoidal wave $VK = K0\sin\theta K$ having a predetermined peak value K0 and corresponding to an AC component of said AC power supply (l00) is divided at predetermined phase intervals (l°) within a predetermined phase range (0° to l80°), and square values $VK^2$ of the sinusoidal wave (VK) are calculated in units of divided phases $\theta K$ ($\theta K = 1, 2, 3, ..., 180°$) so as to calculate the square sum SK ($= Vl^2 + V2^2 + V3^2 + ... + VK^2$) of the sinusoidal wave VK corresponding to the phase $\theta K$, and storing the calculated square sum SK;

reading out a value of a square sum Sn ($= Vl^2 + V2^2 + V3^2 + ... + Vn^2$) at the firing phase ($\theta n$) and a value of a square sum Sm ($= Vl^2 + V2^2 + V3^2 + ... + Vm^2$) at a phase ($\theta m$) upon completion of energization of said switching element (l);

calculating a normalized effective value Vx obtained by normalizing an effective value Vrms of the AC power supply voltage on the basis of the calculated square sums Sn and Sm (equation (l)),

wherein the parameter VK denotes voltage of the sinusoidal wave where the suffix K is an index number defined between a predetermined range (cf. $l \leqq K \leqq l80$ in Table l on page 7) and corresponds to the predetermined phase intervals, the parameter K0 denotes the peak value of VK, the parameter SK denotes the square sum of VK, the parameter $\theta K$ denotes a phase angle of VK, the parameter Sn denotes a square sum of voltage Vn of the sinusoidal wave obtained at a phase angle $\theta n$ where n is a suffix of a predetermined number, the parameter Sm denotes a square sum of Vm of the sinusoidal wave obtained at a phase angle $\theta m$ where m is a suffix of a predetermined number, and the parameter Vx denotes the normalized effective voltage corresponding to an effective voltage (Vt) applied to the welding transformer (2);

detecting a a voltage (v) of said AC power supply (100);

calculating an effective value Vrms from the detected AC power supply voltage (v);

calculating an effective voltage Vt applied to the primary winding of said welding transformer (2) using the effective value Vrms and the normalized effective value Vx; and

voltage-controlling said switching element (l) using the effective voltage Vt as a control feedback signal;

detecting an effective current Irms flowing through said welding transformer (2); and

current-controlling said switching element (l) using the effective current Irms as a control feedback signal.

7. A method according to claim 6, characterized by further comprising:

calculating a use rate P of said welding transformer (2) on the basis of a ratio (equation (3)) of a present value (Vx) to a maximum value (Vl80) of the normalized effective value Vx; and

displaying the calculated use rate P.

## Patentansprüche

1. Steuerungsgerät für einen Widerstandsschweißer mit einem Schweißtransformator (2), bei dem eine Primärwicklung mit einer Wechselstromversorgung (l00) und eine Sekundärwicklung mit einem Schweiß-Elektrodenhalterhalter (23) verbunden sind, und einem zwischen die Wechselstromversorgung (l00) und die Primärwicklung des Schweißtransformators (2) eingeschalteten und mit einer vorbestimmten Zündphase ($\theta n$) gezündeten Schaltelement (l), anfassend:

eine Speichereinheit (l8) mit einer Datentabelle zum Vorausberechnen und Speichern einer Quadratsumme SK in der Weise, daß eine Sinuswelle $VK = KO\sin\theta K$ eines vorbestimmten Spitzenwerts KO und entsprechend einer Wechselstromkomponente der Wechselstromversorgung (l00) zu vorbestimmten Phasenintervallen (l°) innerhalb eines vorbestimmten Phasenbereichs (0° - l80°) dividiert oder geteilt wird und Quadratwerte $VK^2$ der Sinuswelle (VK) in Einheiten geteilter Phasen $\theta K$ ($\theta K = 1, 2, 3, ..., 180°$) berechnet werden, um damit die Quadratsumme SK ($= Vl^2 + V2^2 + V3^2 + ... + VK^2$) der Sinuswelle VK entsprechend der Phase $\theta K$ zu berechnen, und

eine an die Speichereinheit (l8) angeschlossene Vx-Recheneinheit (l9) zum Auslesen eines Werts einer Quadratsumme Sn ($= Vl^2 + V2^2 + V3^2 + ... + Vn^2$) an der Zündphase (bn) und eines Werts einer Quadratsumme Sm ($= Vl^2 + V2^2 + V3^2 + ... + Vm^2$) an einer Phase ($\theta m$) bei Beendigung der Erregung des Schaltelements (l) aus der Speichereinheit (l8) und zum Berechnen eines normierten Effektivwerts Vx, erhalten oder gebildet durch Normierung eines Effektivwerts Vrms der Wechselstromversorgungsspannung auf der Grundlage der ausgelesenen Quadratsummen Sn und Sm (Gleichung (l)),

wobei der Parameter VK die Spannung der Sinuswelle bezeichnet, mit K = eine Indexzahl, die zwischen einem bzw. innerhalb eines vorbestimmten Bereich(s) (vgl. l ≦ K ≦ l80 in Tabelle 1 auf Seite ll) definiert ist und den vorbestimmten Phasenintervallen entspricht, der Parameter KO den Spitzenwert von VK bezeichnet, der Parameter-SK die Quadratsumme von VK bezeichnet, der Parameter θK einen Phasenwinkel von VK bezeichnet, der Parameter Sn eine Quardatsumme der Spannung Vn der bei einem Phasenwinkel θn erhaltenen Sinuswelle bezeichnet, mit n = ein Zusatz einer vorbestimmten Zahl, der Parameter Sm eine Quadratsumme von Vm der Sinuswelle, bei einem Phasenwinkel θm erhalten, bezeichnet, mit m = ein Zusatz einer vorbestimmten Zahl, und der Parameter Vx die normierte Effektivspannung entsprechend einer an den Schweißtransformator (2) angelegten Effektivspannung (Vt) bezeichnet,

eine Einrichtung (5-l2, 20) zum EIN/AUS-Steuern des Schaltelements (l) nach Maßgabe des normierten Effektivwerts Vx und des Effektivwerts Vrms der Wechselstromversorgungsspannung,

eine an den Schweißtransformator (2) angeschlossene Effektivstromdetektoreinrichtung (3, l3, l5, l7) zum Detektieren eines über den Schweißtransformator (2) fließenden Effektivstroms Irms, (sowie)

eine mit der Effektivstromdetektoreinrichtung (l7) verbundene Einrichtung (5 - l2) für die Stromregelung des Schaltelements (l) unter Benutzung des Effektivstroms Irms als Regelrückkopplungssignal.

2. Steuerungsgerät nach Anspruch l, dadurch gekennzeichnet, daß das Schaltelement (l) antiparallel geschaltete Thyristoren aufweist.

3. Steuerungsgerät nach Anspruch l oder 2, dadurch gekennzeichnet, daß der Widerstandsschweißer von einem Einphasen-Vollweg-Typ ist.

4. Steuerungsgerät nach einem der Ansprüche l bis 4, gekennzeichnet durch

eine mit der Wechselstromversorgung (l00) verbundene Spannungsdetektoreinheit (4) zum Detektieren einer Spannung (V) der Wechselstromversorgung (l00),

eine mit der Spannungsdetektoreinheit (4) gekoppelte Vrms-Recheneinheit (l6) zum Berechnen des Effektivwerts Vrms anhand der durch die Spannungsdetektöreinheit (4) detektierten Wechselstromversorgungsspannung (v),

eine mit der Vrms-Recheneinheit (l6) verbundene Vt-Recheneinheit (20) zum Berechnen einer an die Primärwicklung des Schweißtransformators (2) angelegten Effektivspannung Vt unter Benutzung des Effektivwerts Vrms und des normierten Effektivwerts Vx sowie

eine an die Vt-Recheneinheit (20) angekoppelte Einrichtung (5 - l2) für die Spannungsregelung des Schaltelements (l) unter Heranziehung der Effektivspannung Vt als Regel-Rückkopplungssignal.

5. Steuerungsgerät nach einem der Ansprüche l bis 4, gekennzeichnet durch

eine mit der Vx-Recheneinheit (l9) verbundene P-Recheneinheit (2l) zum Berechnen einer Benutzungshäufigkeit bzw. eines Nutzungsgrades P des Schweißtransformators (2) auf der Grundlage eines Verhälnisses (Gleichung (3)) eines vorliegenden oder Augenblickswerts (Vx) zu einem Höchstwert (Vl80) des normierten Effektivwerts Vx und

eine mit der P-Recheneinheit (2l) verbundene Einheit (22) zum Anzeigen der berechneten Benutzungshäufigkeit P.

6. Verfahren zum Steuern eines Widerstandsschweißers nach Anspruch 1, umfassend die folgenden Schritte:

Berechnen einer Quadratsumme SK in der Weise, daß eine Sinuswelle VK = KOsinθK mit einem vorbestimmten Spitzenwert KO und entsprechend einer Wechselstromkomponente der Wechselstromversorgung (l00) in vorbestimmten Phasenintervallen (l°) innerhalb eines vorbestimmten Phasenbereichs (0° - l80°) dividiert oder geteilt wird und Quadratwerte $VK^2$ der Sinuswelle (VK) in Einheiten der geteilten Phasen θK (θK = l, 2, 3, ..., l80°) berechnet werden, um die Quadratsumme SK (= $Vl^2 + V2^2 + V3^2 + ... + VK^2$) der Sinuswelle VK entsprechend der Sinuswelle VK entsprechend der Phase θK zu berechnen und die berechnete Quadratsumme SK zu speichern,

Auslesen eines Werts einer Quadratsumme Sn (= $Vl^2 + V2^2 + V3^2 + ... + Vn^2$) bei der Zündphase (θn) und eines Werts einer Quadratsumme Sm (= $Vl^2 + V2^2 + V3^2 + ... + Vm^2$) bei einer Phase (θm) bei Beendigung der Erregung des Schaltelements (l),

Berechnen eines normierten Effektivwerts Vx, erhalten oder gebildet durch Normierung eines Effektivwerts Vrms der Wechselstromversorgungsspannung auf der Grundlage der berechneten Quadratsummen Sn und Sm (Gleichung (I)),

wobei der Parameter VK die Spannung der Sinuswelle bezeichnet, mit K = eine Indexzahl, die zwischen einem bzw. innerhalb eines vorbestimmten Bereich(s) (vgl. $I \leqq K \leqq I80$ in Tabelle I auf Seite II) definiert ist und den vorbestimmten Phasenintervallen entspricht, der Parameter KO den Spitzenwert von VK bezeichnet, der Parameter SK die Quadratsumme von VK bezeichnet, der Parameter θK einen Phasenwinkel von VK bezeichnet, der Parameter Sn eine Quadratsumme dei Spannung Vn der bei einem Phasenwinkel θn erhaltenen Sinuswelle bezeichnet, mit n = ein Zusatz einer vorbestimmten Zahl, der Parameter Sm eine Quadratsumme von Vm der Sinuswelle, bei einem Phasenwinkel θm erhalten, bezeichnet, mit m = ein Zusatz einer vorbestimmten Zahl, und der Parameter Vx die normierte Effektivspannung entsprechend einer an den Schweißtransformator (2) angelegten Effektivspannung (Vt) bezeichnet,

Detektieren einer Spannung (v) der Wechselstromversorgung (I00),

Berechnen eines Effektivwerts Vrms anhand der detektierten Wechselstromversorgungsspannung (v), Berechnen einer an die Primärwicklung des Schweißtransformators (2) angelegten Effektivspannung Vt unter Heranziehung des Effektivwerts Vrms und des normierten Effektivwerts Vx und

Spannungsregeln des Schaltelements (I) unter Benutzung der Effektivspannung Vt als Regel-Rückkopplungssignal,

Detektieren eines durch den schweißtransformators (2) fließenden Effektivstrom Irms sowie

Stromregeln des schaltelements (I) unter Benutzung des Effektivstroms Irms als Regel-Rückkopplungssignal.

7. Verfahren nach Anspruch 6, gekennzeichnet durch den weiteren schritt:

Berechnen einer Benutzungshäufigkeit des Schweißtransformators (2) auf der Grundlage eines Verhältnisses (Gleichung (3)) eines vorliegenden oder Augenblickswertes (Vx) zu einem Höchstwert (VI80) des normierten Effektivwerts Vx und

Anzeigen der berechneten Benutzungshäufigkeit P.


## Revendications

1. Appareil de commande utilisé pour une soudeuse par résistance qui comprend un transformateur de soudage (2) dont un enroulement primaire est connecté à une alimentation alternative (100) et dont un enroulement secondaire est connecté à un pistolet à souder (23), et un élément de commutation (1) qui est inséré entre ladite alimentation alternative (100) et l'enroulement primaire dudit transformateur de soudage (2) et qui est amorcé selon une phase d'amorçage prédéterminée (θn), comprenant :

un moyen de stockage (18) incluant une table de données pour calculer à l'avance et stocker une somme de carrés SK de telle sorte qu'une onde sinusoïdale VK = K0 sin θK présentant une valeur de pic prédéterminée K0 et correspondant à une composante alternative de ladite alimentation alternative (100) soit divisée selon des intervalles de phase prédéterminés (1°) pour une plage de phases prédéterminée (0° à 180°) et que des valeurs de carrés $VK^2$ de l'onde sinusoïdale (VK) soient calculées selon des unités de phases divisées θK (θK = 1, 2, 3,..., 180°) de manière à calculer la somme de carrés SK (= $V1^2 + V2^2 + V3^2 + ...+ VK^2$) de l'onde sinusoïdale VK correspondant à la phase θK ; et

un moyen de calcul de Vx (19) couplé audit moyen de stockage (18) pour extraire dudit moyen de stockage (18) une valeur d'une somme de carrés Sn (= $V1^2 + V2^2 + V3^2 +....+ Vn^2$) pour la phase d'amorçage (θn) et une valeur d'une somme de carrés Sm (= $V1^2 + V2^2 + V3^2 +...+ Vm^2$) pour une phase (θm) suite à la fin de l'excitation dudit élément de commutation (1) et pour calculer une valeur efficace normalisée Vx obtenue par normalisation d'une valeur efficace Vrms de la tension d'alimentation alternative sur la base des sommes de carrés extraites Sn et Sm (équation (1)),

dans lequel le paramètre VK indique une tension de l'onde sinusoïdale, le suffixe K est un nombre d'indice défini sur une plage prédéterminée (cf. $1 \leqq K \leqq 180$ du tableau 1) et correspond aux intervalles de phase prédéterminés, le paramètre K0 indique la valeur de pic de VK, le paramètre SK indique la somme de carrés de VK, le paramètre θK indique un angle de phase de VK, le paramètre Sn indique une somme de carrés d'une tension Vn de l'onde sinusoïdale obtenue pour un angle de phase θn où n est un suffixe d'un nombre prédéterminé, le paramètre Sm indique une somme de carrés de Vm de l'onde sinusoïdale obtenue pour un angle de phase θm où m est un suffixe d'un nombre prédéterminé et le paramètre Vx indique la tension efficace normalisée correspondant à une tension efficace (Vt) appliquée au transformateur de soudage (2) ;

un moyen (5-12, 20) pour commander l'activation/désactivation dudit élément de commutation (1) en relation avec la valeur efficace normalisée Vx et la valeur efficace Vrms de ladite tension d'alimentation alternative,

un moyen de détection de courant efficace (3, 13, 15, 17) couplé audit transformateur de soudage (2) pour détecter un courant efficace Irms qui circule au travers dudit transformateur de soudage (2) ;

un moyen (5-12) couplé audit moyen de détection de courant efficace (17) pour commander en courant ledit élément de commutation (1) en utilisant le courant efficace Irms en tant que signal de retour de commande.

2. Appareil de commande selon la revendication 1, caractérisé en ce que ledit élément de commutation (1) inclut des thyristors connectés de façon anti-parallèle ou tête-bêche.

3. Appareil de commande selon la revendication 1 ou 2, caractérisé en ce que ladite soudeuse par résistance est d'un type pleine onde/phase unique.

4. Appareil de commande selon l'une quelconque des revendications 1 à 4, caractérisé en ce qu'il comprend en outre :

un moyen de détection de tension (4) couplé à ladite alimentation alternative (100) pour détecter une tension (V) de ladite alimentation alternative (100) ;

un moyen de calcul de Vrms (16) couplé audit moyen de détection de tension (4) pour calculer la valeur efficace Vrms à partir de la tension d'alimentation alternative (V) détectée par ledit moyen de détection de tension (4) ;

un moyen de calcul de Vt (20) couplé audit moyen de calcul de Vrms (16) pour calculer une tension efficace Vt appliquée à l'enroulement primaire dudit transformateur de soudage (2) en utilisant la valeur efficace Vrms et la valeur efficace normalisée Vx ; et

un moyen (5-12) couplé audit moyen de calcul de Vt (20) pour commander en tension ledit élément de commutation (1) en utilisant la tension efficace Vt en tant que signal de retour de commande.

5. Appareil de commande selon l'une quelconque des revendications 1 à 4, caractérisé en ce qu'il comprend en outre :

un moyen de calcul de P (21) couplé audit moyen de calcul de Vx (19) pour calculer un taux d'utilisation P dudit transformateur de soudage (2) sur la base d'un rapport (équation (3)) d'une valeur courante (Vx) sur une valeur maximale (V180) de la valeur efficace normalisée Vx ; et

un moyen (22) couplé audit moyen de calcul de P (21) pour afficher le taux d'utilisation calculé P.

6. Procédé de commande d'une soudeuse par résistance selon la revendication 1, comprenant les étapes de :

calcul d'une somme de carrés SK de telle sorte qu'une onde sinusoïdale VK = K0 sin θK présentant une valeur de pic prédéterminée K0 et correspondant à une composante alternative de ladite alimentation alternative (100) soit divisée selon des intervalles de phase prédéterminés (1°) pour une plage de phases prédéterminée (0° à 180°) et que des valeurs de carrés VK2 de l'onde sinusoïdale (VK) soient calculées selon des unités de phases divisées θK (θK = 1, 2, 3, ..., 180°) de manière à calculer la somme de carrés SK (= $V1^2 + V2^2 + V3^2 +...+ VK^2$) de l'onde sinusoïdale VK correspondant à la phase θK et stockage de la somme de carrés calculée SK ;

extraction d'une valeur d'une somme de carrés Sn (=$V1^2 + V2^2 + V3^2 + ....+ Vn^2$) pour la phase d'amorçage (θn) et d'une valeur d'une somme de carrés Sm (= $V1^2 + V2^2 + V3^2 +...+ Vm^2$) pour une phase (θm) suite à la fin de l'excitation dudit élément de commutation (1) ;

calcul d'une valeur efficace normalisée Vx obtenue par normalisation d'une. valeur efficace Vrms de la tension d'alimentation alternative sur la base des sommes de carrés extraites Sn et Sm (équation (1)),

dans lequel le paramètre VK indique une tension de l'onde sinusoïdale, le suffixe K est un nombre d'indice défini sur une plage prédéterminée (cf. $1 \leqq K \leqq 180$ du tableau 1) et correspond aux intervalles de phase prédéterminés, le paramètre K0 indique la valeur de pic de VK, le paramètre SK indique la somme de carrés de VK, le paramètre θK indique un angle de phase de VK, le paramètre Sn indique une somme de carrés d'une tension Vn de l'onde sinusoïdale obtenue pour un angle de phase θn où n est un suffixe d'un nombre prédéterminé, le paramètre Sm indique une somme de carrés de Vm de l'onde sinusoïdale obtenue pour un angle de phase θm où m est un suffixe d'un nombre prédéterminé et le paramètre Vx indique la tension efficace normalisée correspondant à une tension efficace (Vt) appliquée au transformateur de soudage (2) ;

détection d'une tension (V) de ladite alimentation alternative (100) ;

calcul d'une valeur efficace Vrms à partir de la tension d'alimentation alternative détectée (V) ;

calcul d'une tension efficace Vt appliquée à l'enroulement primaire dudit transformateur de soudage (2) en utilisant la valeur efficace Vrms et la valeur efficace normalisée Vx ; et

commande en tension dudit élément de commutation (1) en utilisant la tension efficace Vt en tant que signal de retour de commande ;

détection d'un courant efficace Irms qui circule au travers dudit transformateur de soudage (2) ; et

commande en courant dudit élément de commutation (1) en utilisant le courant efficace Irms en tant que signal de retour de commande.

7. Procédé selon la revendication 6, caractérisé en ce qu'il comprend en outre :

le calcul d'un taux d'utilisation P dudit transformateur de soudage (2) sur la base d'un rapport (équation (3)) d'une valeur courante (Vx) sur une valeur maximale (V180) de la valeur efficace normalisée Vx ; et

l'affichage du taux d'utilisation calculé P.

F I G. 1

EP 0 339 551 B1

FIG. 2A

FIG. 2B

```
        ┌──────────┐
        │  START   │
        └────┬─────┘
             │
   SII       ▼
 ┌───────────────────────┐
 │   READ  FIRING        │
 │   PHASE DATA ⊖n       │
 └───────────┬───────────┘
             │
             ▼
   SI2      ╱╲
         ╱      ╲          NO
        ╱ Vth≑0   ╲──────────►
        ╲   ?    ╱
         ╲      ╱
           ╲  ╱
            ▼ YES
   SI3      ╱╲
         ╱      ╲          NO
        ╱ Vth≫0  ╲──────────►
        ╲        ╱
         ╲      ╱
           ╲  ╱
   SI4       ▼ YES
 ┌───────────────────────┐
 │   READ ⊖(t) FROM      │
 │   PHASE  COUNTER      │
 └───────────┬───────────┘
             │
   SI5       ▼
 ┌───────────────────────┐
 │ READ Sn & Sm FROM     │
 │ NORMALIZATION TABLE   │
 │ BASED ON ⊖n & ⊖m      │
 └───────────┬───────────┘
             │
   SI6       ▼
 ┌───────────────────────┐
 │ CALCULATE  VX         │
 │ VX=KI·√Sm+SI80-Sn     │
 └───────────┬───────────┘
             │
             ▼
        ┌──────────┐
        │   END    │
        └──────────┘
```

# F I G.  3A

START

S21  START POINT OF ONE CYCLE ?  — NO

YES

S22  Vrms = 0

S23  A/D-CONVERT INSTANT VK & READ CONVERTED Vk

S24  vrms = vrms + vk$^2$

S25  PHASE IS ADVANCED BY HALF CYCLE ?  — NO

YES

S26  PHASE IS ADVANCED BY PREDETERMINED VALUE?  — YES

NO

S27  WAIT PHASE SHIFT BY PREDETERMINED VALUE

S28  CALCULATE Vrms  vrms = KO·$\sqrt{\text{vrms}}$

END

# F I G. 3B